# EUROPÄISCHE PATENTANMELDUNG

(11) **EP 1 061 447 A2**
(43) Veröffentlichungstag der Anmeldung: **20.12.2000**
(21) Anmeldenummer: 00109776.5
(22) Anmeldetag: 09.05.2000
(51) Int. Cl.: G06F 11/00

(54) **Partitionierung und Überwachung von softwaregesteuerten Systemen**

(30) Priorität: 17.06.1999 DE 19927657
(71) Anmelder: DaimlerChrysler AG, 70567 Stuttgart (DE)
(72) Erfinder: Seyer, Reinhard, 63110 Rodgau (DE); Fischer, Kerstin, 63486 Bruchköbel (DE)
(74) Vertreter: Maute, Hans-Jürgen, Dipl.-Ing.

(57) **Zusammenfassung**

Flexibilität, Leistungsfähigkeit und Kosten führen dazu, daß immer mehr Prozesse mit Hilfe von softwaregesteuerten Elektroniken kontrolliert werden. Es handelt sich dabei in der Regel um Elektroniken, die mit Hilfe von Mikroprozessoren gesteuert werden. Die hier vorgestellte Erfindung ist darauf ausgerichtet, die Zuverlässigkeit dieser Systeme zu steigern und gleichzeitig den Aufwand für ihre Entwicklung zu verringern. Hierzu ist eine Prozessorüberwachung vorgesehen, die eine robuste Partitionierung sicherstellt. Sie kontrolliert Speicherzugriffe und Einhaltung von Zeiten bei der Bearbeitung von Programmabschnitten und - modulen.

## Beschreibung

Die Erfindung betrifft ein Verfahren nach dem Oberbegriff des unabhängigen Anspruch. Flexibilität, Leistungsfähigkeit und Kosten führen dazu, daß immer mehr Prozesse mit Hilfe von softwaregesteuerten Elektroniken kontrolliert werden. Es handelt sich dabei in der Regel um Elektroniken, die mit Hilfe von Mikroprozessoren gesteuert werden. Die hier vorgestellte Erfindung ist darauf ausgerichtet, die Zuverlässigkeit dieser Systeme zu steigern und gleichzeitig den Aufwand für ihre Entwicklung zu verringern. Hierzu ist eine Prozessorüberwachung vorgesehen, die eine robuste Partitionierung sicherstellt. Sie kontrolliert Speicherzugriffe und Einhaltung von Zeiten bei der Bearbeitung von Programmabschnitten und - modulen.

Im Stand der Technik bekannte Prozesse werden von flexiblen, in der Regel softwarebasierten Elektroniken gesteuert. Vorteil dieser Steuerungen ist, daß sie in Bezug auf die Regelung und Steuerung eine extrem hohe Leistungsfähigkeit bieten. Ihre prinzipiell immer gleiche Grundstruktur bestehend aus Sensorik, digitaler prozessorgesteuerter Informationsverarbeitung und Aktuatorik läßt sich auf fast alle Prozesse anwenden, auch wenn sie sehr kompliziert zu behandeln sind. Der eigentliche Verarbeitungsteil übernimmt die spezifische Anpassung an den jeweiligen Prozeß. Sie erfolgt in der Regel mit Hilfe einer Steuerungssoftware, die in der Lage ist, komplexe Prozesse zu steuern. Komplexe Prozesse erfordern auf Seiten der Software umfangreiche und in vielen Fällen auch komplexe Softwarestrukturen. Sie sind so angelegt, daß sie den unterschiedlichen Prozeßzuständen entsprechend reagieren, Zeiten einhalten und ausreichend Reaktionsalternativen bereithalten. Je komplexer Anwendungen und Software werden, um so schwieriger ist es, eine fehlerfreie Software zu erstellen. Fehlerfreiheit ist eine Forderung, die insbesondere bei entsprechenden Elektroniken in sicherheitsrelevanten Anwendungen eine Rolle spielt. Lange Entwicklungszeiten mit umfangreichen und langwierigen Testphasen verursachen hohe Kosten. Nachteilig ist, daß selbst nach Beendigung aller Tests keine hundertprozentige Sicherheit garantiert werden kann, daß die Software nicht noch versteckte Fehler enthält. Versteckte Fehler sind die Regel und nicht die Ausnahme. Nachteilig ist weiterhin, daß die Auswirkungen versteckter Fehler nicht vorhersagbar sind.

Es gibt unterschiedlich Wege, auf dieses Problem zu reagieren. Einer besteht darin, eine Toolkette bestehend aus fehlerfreien Werkzeugen aufzubauen, die in der Lage sind, komplexe Programme aus Anforderungen automatisch zu generieren. Nachteilig ist der umfangreiche Code, der hierbei entsteht. Nachteilig nicht nur bezüglich seiner Auswirkungen auf die Speicherkosten, sondern nachteilig, weil schnelle Realzeitsysteme auf diesem Weg entweder nicht oder nur durch erhöhten Aufwand für extrem schnelle Hardware zu realisieren sind.

Erfindungsgemäße Aufgabe ist es daher, die unkontrollierte Ausbreitung von Softwarefehlern zu verhindern und innerhalb eines Mikroprozessors den Ablauf vollständig unabhängiger Prozesse bzw. Programmodule zu ermöglichen. Insbesondere soll die gegenseitige Beeinflussung durch fehlerhafte Speicherzugriffe verhindert werden und Vorsorge getroffen werden, daß sich die unabhängigen Programmodule nicht gegenseitig zeitlich beeinflussen.

Erfindungsgemäß wird diese Aufgabe gelöst durch die kennzeichnenden Merkmale des unabhängigen Anspruchs. Weitere vorteilhafte Ausführungsformen sind in den Unteransprüchen enthalten.

Die Erfindung baut auf der Tatsache auf, daß sich kleine Einheiten besser kontrollieren lassen als große. Die Komplexität kleiner Einheiten ist begrenzt, das erleichtert Überschaubarkeit und Transparenz. Kleine Einheiten besitzen weniger Zustände und sind daher mit geringerem Aufwand zu testen. Dies gilt allerdings nur dann, wenn sie sich gegenseitig nicht negativ beeinflussen. Die Logik, die sich dahinter verbirgt, besagt, daß die Summe der möglichen Zustände einzelner Einheiten geringer ist als die Kombination aller Zustände. Betrachtet man beispielsweise ein System bestehend aus vier Einheiten, mit jeweils vier unabhängigen Zuständen, so erhält man 16 Testfälle. Wären die Zustände voneinander abhängig oder könnten sie sich gegenseitig beeinflussen, erhielte man 256 Testfälle. Es ist also vorteilhaft komplexe Prozesse in kleine unabhängige Module zu unterteilen.

Dies wird erfindungsgemäß durch eine Speicher- und Zeitpartitionierung gelöst. Mit Hilfe einer Überwachungseinheit und einer Zuweisungstabelle wird eine Partitionierung von Speichereinheiten vorgenommen. Hierzu wir der Gesamtprozess programmtechnisch in einzelne kleinere Module unterteilt. Diese Module sind selbst wieder eigenständige Programme oder Unterprogramme. Jedem einzelnen Modul wird ein vorherbestimmter festgelegter Speicherbereich bzw. Adressraum zugewiesen. Die Zuweisung des Speicherraums bzw. des Adressraums erfolgt mit Hilfe einer Zuweisungstabelle. Hierzu werden zuvor ermittelte Speichergrenzen bzw. Adressgrenzen, auf die das jeweilige Programm-Modul Zugriff haben muß, in einer Zuweisungstabelle fest abgelegt. Festgelegt werden die Bereiche für Codespeicher, Datenspeicher und gegebenenfalls auch für die Peripherie. Fest abgelegt bedeutet, daß die Speichergrenzen im Unterschied zum Stand der Technik nicht variabel festgelegt werden und eben nicht durch die ablaufenden Programme wie z.B. Kommunikationssoftware verändert werden können. Fest abgelegt bedeutet, daß die Zuweisungstabelle in einem hardwaremäßig realisierten Speicher dermaßen abgelegt werden, daß Anwendungsprogramme die Zuweisungstabelle nicht mehr verändern können. Die abgelegten Speichergrenzen sind durch ein laufendes Programm-Modul auch im Fehlerfall nicht beeinflußbar. Im ordnungsgemäßen Programmlauf überwacht eine Überwachungseinheit die Einhaltung dieser Partitionierung, die in der Zuweisungstabelle durch die Speichergrenzen festgelegt ist. Beansprucht ein Programm-Modul eine Adresse außerhalb der in der Zuweisungstabelle festgelegten Speichergrenzen, so wird dies von der Überwachungseinheit als Fehler diagnostiziert. Grundsätzliche Regel bei der Fehlererkennung ist, daß jedes Programm-Modul das Recht besitzt nur auf die Bereiche zuzugreifen, die für das Programm-Modul freigegeben sind. Bezüglich des Datenspeichers und der Peripherie gilt, daß alle Speicherbereiche von jedem Programm-Modul gelesen werden können, aber daß die einzelnen Programm-Module nur jeweils für die in der Zuweisungtabelle ihnen zugeordneten Speicherbereiche Schreibberechtigung haben. Jedes Modul kann also sämtliche Informationen des Gesamtprozesses lesen, kann jedoch nur innerhalb der zugewiesenen Bereiche durch Schreibberechtigung Veränderungen vornehmen. Unter der festen Ablegung von Speichergrenzen in einer hardwaremäßigen Zuweisungstabelle und unter der festen Zuordnung dieser Speicherbereiche zu einzelnen berechtigten Programm-Modulen wird im folgenden die erfindungsgemäße robuste Partitionierung verstanden.

Zusätzlich zur Speicherpartitionierung und der damit verbundenen Unabhängigkeit der Speicherbehandlung enthält die Erfindung auch eine Kontrolle der zeitlichen Unabhängigkeit der einzelnen Programm-Module. Dies gilt insbesondere für deterministische Prozesse. Diese Zeitpartitionierung erfolgt ebenfalls mit Hilfe der Zuweisungstabelle, in die die Zeitvorgaben fest abgelegt werden. Dadurch ist die Zeitüberwachung durch das laufende Programm auch im Fehlerfall nicht beeinflußbar. Wenn ein Programm aus mehreren Modulen besteht und ein Ergebnis nach einer festgelegten Zeit garantiert zur Verfügung gestellt sein soll, dann muß gewährleistet sein, daß sich alle Programm-Module mit ihren Verarbeitungszeiten an festgelegte zeitliche Vorgaben halten. Stand der Technik ist, daß ein Programmierer zeitliche Abschätzungen trifft und sie gegebenenfalls mit Hilfe von Tests verifiziert. Wenn ein Modul Teil einer Verarbeitungskette ist und die vorgegebenen Zeitbedingungen nicht einhält, kann es zum Versagen der Gesamtsteuerung kommen. Ein an sich bekanntes grobes Hilfsmittel ist ein Watchdog, der in dem Fall, in dem sich ein Programm total 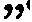 aufgehängt" hat, einen Neustart auslöst. Dies kann man sich bei PC's und nicht sicherheitsrelevanten Systemen erlauben, es ist aber bei Systemen, die beispielsweise Lenkung oder Bremse eines Fahrzeugs steuern, nicht akzeptabel. Erfindungsgemäß gelingt die Zeitüberwachung mit Vorteil mit Hilfe einer Zuweisungstabelle. Den einzelnen Programm-Modulen werden zusätzlich zu den Speicherbereichen feste Zeitkontigente zugeordnet. Eine Verletzung der Vorgaben entspricht einer Verletzung der Spezifikation und sollte nicht vorkommen. Der Fehler kann durch die Überwachungseinheit, die die Einhaltung der Zeitvorgaben, wie sie für die einzelnen Programm-Module festgelegt wurden, diagnostiziert und protokolliert werden. Auch hier ist über die Zuweisungstabelle in analoger Weise zur Überwachug der Speichergrenzen stets eine eindeutige Zuordnung des Fehlers zu einem bestimmten Programm-Modul möglich. Das entsprechende Programm-Modul wird abgebrochen und somit eine Auswirkung auf das Gesamtzeitverhalten des Systems verhindert.

Mit der Erfindung werden hauptsächlich die folgenden Vorteile erzielt:

Durch die robuste Partitionierung des Speicherraums und dessen feste Zuordnung zu den einzelnen Programm-Modulen und durch die Überwachung dieser Speichergrenzen mittels einer Überwachungseinheit ist im Fehlerfall stets eine eindeutige Zuordnung möglich, in welchem Programm-Modul ein Fehler aufgetreten ist und welche Speichergrenze verletzt wurde. Dies Beschränkt Fehler in der Bearbeitung einer programmtechnischen Aufgabe auf den Bereich eines Programm-Moduls und macht eine unkontrollierte Weiterverbreitung des Fehlers unmöglich.

Ein weiterer Vorteil der Erfindung ist, daß aufwendige Kommunikationssoftware, wie sie im Stand der Technik für die Speicherverwaltung und Adressenverwaltung sowie für die Kommunikation einzelner Programm-Module auf verteilten Systemen implementiert werden muß, nicht aufgebaut werden muß. Die Kommunikationswege und die Speicherbereiche werden im Vorfeld in der Zuweisungstabelle festgelegt, so daß die Kommunikationssoftware entfallen kann. Die Anwendungsprogramme kommen dadurch mit weniger Code aus, so daß die Anwendung selbst damit enorme Geschwindigkeitsvorteile besitzt. Vorzüglichste Anwendung der Erfindung ist daher der Einsatz in Realzeitsystemen wie sie z.B. in Kraftfahrzeugen in elektronischen Stabilitätssystemen oder elektronisch gesteuerten Bremssystemen und dergleichen zum Einsatz kommen. Weitere Anwendungen liegen z.B. bei Elektroniken zur Steuerung einer Flugzeugkabine.

Eine weitere vorteilhafte Ausführungsform der Erfindung ist es, den Abbruch eines Programm-Moduls mit einem Notprogramm zu verbinden, das den nachfolgenden Programm-Modulen ein Ergebnis liefert, mit dem sie so weiterarbeiten können, daß gegebenenfalls die Leistungsfähigkeit der Gesamtelektronik verringert ist, aber ihre Zuverlässigkeit erhalten bleibt. Hierzu wird der an sich bekannte Interrupt mit einer Interruptservice-Routine hinterlegt. Sobald der Interrupt aufgerufen wird, wird die Interruptservice Routine gestartet und ein der Fehlersituation angemessenes Notprogramm gestartet.

In einer weiteren vorteilhaften Ausfführungsform werden die Überwachungsgrenzen des Speichers von einem an sich bekannten Linker automatisch erzeugt und erfindungsgemäß in der Zuweisungstabelle der Überwachungseinheit abgelegt. Hierzu werden die einzelnen Programm-Module zunächst in an sich bekannter Weise mit einem Linker zu einem lauffähigen Programm verbunden. Die Speicherdaten werden in einem Überwachungsspeicher mitprotokolliert und die sogenannte Linkerliste erzeugt. Ergibt sich bei Testläufen ein fehlerfreier Programmablauf, so können aus der Linkerliste die Speichergrenzen entnommen werden und in die Zuweisungstabelle übernommen werden.

In einer weiteren vorteilhaften Ausführungsform sind für jedes Programm-Modul mindestens zwei Zeiten in der Zuweisungstabelle eingetragen. Es können auch eine größere Anzahl von Überwachungszeiten pro Modul in die Zuweisungstabelle eingetragen sein. Die Überschreitung einer ersten Überwachungszeit bewirkt beispielsweise den Abbruch des laufenden Programm-Moduls. Die zweite spätere Zeit dient beispielsweise der Überwachung für das ordnungsgemäße Anlaufen des in der Interrupt-Routine hinterlegten Notprogramms, und sorgt auf diese Weise dafür, daß auch durch das Notprogramm sich kein Fehler einschleichen kann.

Ein Ausführungsbeispiel der Erfindung wird im folgenden anhand von Zeichnungen dargestellt und näher erläutert. Es zeigen:
- Fig. 1: Eine graphische Darstellung der Grundfunktionen der erfindungsgemäßen Partitionierung, dargestellt sind eine Speicherpartitionierung sowie eine Zeitpartitionierung.
- Fig. 2: Ein Blockschaltbild einer erfindungsgemäßen Ausführungsform für eine beispielhafte Elektronikumgebung
- Fig. 3: Eine graphische Darstellung der erfindungsgemäßen Zuweisungstabelle und deren Zuordnung zu den einzelnen partitionierten Programm-Modulen mittels Zeiger

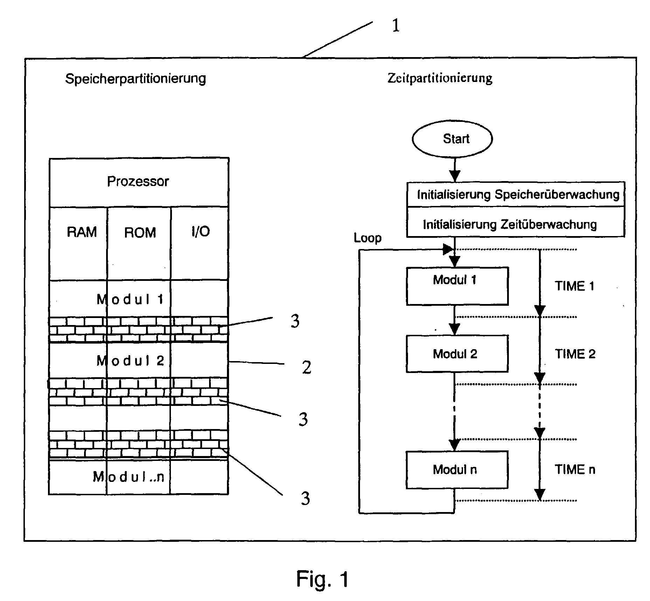

Die erfindungsgemäße robuste Partitionierung setzt sich in einer vorteilhaften Ausführungsform aus den Grundfunktionen einer Speicherpartitionierung sowie einer Zeitpartitionierung zusammen. Die Speicherpartitionierung ist ein wesentliches Element der Erfindung und in Fig. 1 als Blocktabelle dargestellt. Die Zeitpartitionierung ist in Fig. 1 als Flußdiagramm dargestellt. Unterschiedliche Programmodule Modul 1, Modul 2 bis Modul n teilen sich Prozessor, ROM, RAM und I/O. Für die Anzahl der Programm-Module gibt es erfindungsgemäß keine Beschränkungen. Dies soll durch die Variable n verdeutlicht werden. In der praktischen Anwendung ist die Anzahl der Programm-Module beschränkt durch die physikalische Größe des Speicherbereichs 2 und durch die Physikalische Größe der Systemgrenzen, die allgemein mit der Ziffer 1 bezeichnet sind. Die einzelnen Programm-Module Modul 1, Modul 2 bis Modul n sind robust partitioniert, das heißt es sind ihnen feste Speicherbereiche zugewiesen, die in der graphischen Darstellung ebenfalls mit Modul 1, Modul 2, Modul n bezeichnet sind. Die einzelnen Speicherbereiche sind durch gedanklich undurchlässige Speichergrenzen 3 getrennt. In der graphischen Darstellung als Mauern gezeigt. Jedem Speicherbereich Modul 1, Modul 2 bis Modul n ist ein ebenfalls partitioniertes Programm-Modul zugeordnet. Durch die feste Zuordnung können die Bezeichnung der Speichermodule und die Bezeichnungen der Programm-Module synonym zueinander verwendet werden. Der Einfachheit halber werden die Bezeichnungen auch in dieser Schrift synonym verwendet. Die undurchlässigen Speicherbereiche 3 trennen die einzelnen Programm-Module voneinander. Die Speichergrenzen wirken jedoch nicht als Zugangsbarrieren zu den Systemresourcen Prozessor, RAM, ROM, I/O. Zu diesen Systemresourcen haben die einzelnen Programm-Module Zugriff. Die Zeitpartitionierung erfolgt mit der Zeitüberwachung, die jedem Programm-Modul Modul 1, Modul 2 bis Modul n eine Zeit TIME 1, TIME 2 bis TIME n zur Verfügung stellt. Beim Start des Systems wird bei der Initialisierung der Elektronik und der Programme auch die Speicherüberwachung und die Zeitüberwachung initialisiert. Überschreitet ein Programm-Modul die ihm zur Verfügung gestellte Zeit so wird dieses Programm-Modul von der Zeitüberwachung abgebrochen. Es wird nur dasjenige Programm-Modul abgebrochen, dessen Zeit überschritten wurde. Die übrigen Programm-Module arbeiten weiter. Dies wird durch den rekursiven Pfeil mit der Bezeichnung Loop dargestellt.

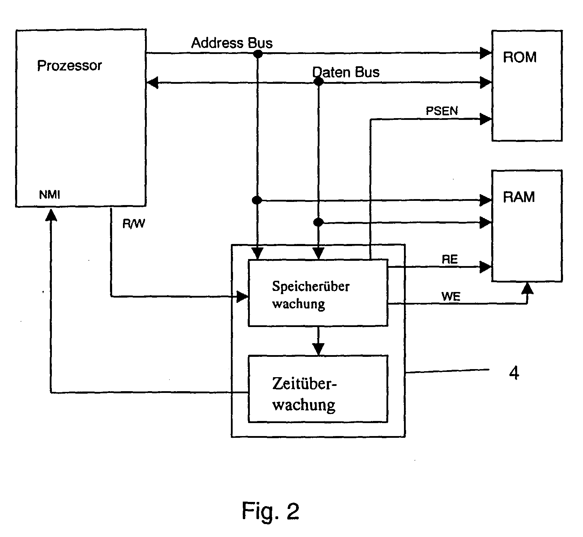

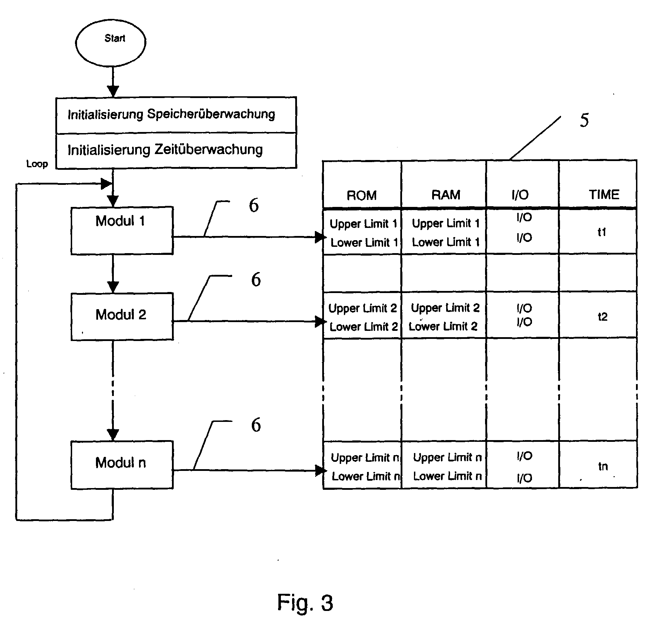

Fig 2. zeigt ein Blockschalt einer erfindungsgemäßen Ausführungsform der robusten Partitionierung in einer beispielhaften Elektronikumgebung. Die Überwachungseinheit 4 ist als getrenntes hardwaremäßiger Beuteil ausgebildet. Die Überwachungseinheit 4 mit der Grundfunktion Speicherüberwachung und der Grundfunktion Zeitüberwachung steht in Verbindung mit einem Prozessor, einem ROM (Read Only Memory) und einem RAM ( Read and Access Memory). Über die Statuszugriff R/W erfährt die Speicherüberwachung welche Operationen der Prozessor auszuführen versucht. Entsprechend einer in der Speicherüberwachung abgelegten Zuweisungstabelle 5 , die in Fig. 3 näher beschrieben ist, gibt die Überwachungseinheit 4 die Resourcen ROM oder RAM für den Prozessor entsprechend den in der Zuweisungstabelle 5 festgelegten Berechtigungen frei. Hierzu verfügt die Überwachungseinheit 4 über einen Write Enable Zugriff WE und einen Read Enable Zugriff RE auf die Resource RAM sowie über einen Programm Storage Enable Zugriff PSNE auf die Resource ROM. Weiterhin verfügt die Überwachungseinheit 4 über Zugriffe auf den Adress Bus und den Daten Bus. Mit dem Zugriff über den Adress Bus überprüft die Überwachungseinheit 4 die vom Prozessor verwendeten Adressbereiche entsprechend der Zuweisungtabelle 5. Die Überprüfung erfolgt durch Vergleich der vom jeweils aktiven Programm-Modul auf dem Adressbus verwendeten Adressen, mit den in der Zuweisungstabelle 5 abgelegten Adressen, die für das aktive Programm-Modul erlaubt sind. Verwendet das aktive Programm-Modul Adressen , die für das Programm-Modul nicht zugelassen sind, diagnostiziert die Überwachungseinheit 4 einen Fehler, der registriert wird und eindeutig dem aktiven Programm-Modul zugeordnet wird, das den Fehler in der Adressenverletzung verursacht hat. Um entscheiden zu können, welches Programm-Modul jeweils aktiv ist, verfügt die Überwachungseinheit 4 über einen Zugriff zum Datenbus. Über den Datenbus überprüft die Überwachungseinheit 4, welches Programm-Modul im Prozessor aktiviert ist und verknüpft zu dem jeweils aktiven Programm-Modul die jeweils zugehörige Zeile der Zuweisungstabelle 5 entsprechend der festgelegten Verknüpfungsvorschrift. Eine Verknüpfungsvorschrift ist in Fig. 3 graphisch dargestellt. Liegt eine Adresse außerhalb eines der in der Zuweisungstabelle festgelegten Bereiche, so gibt die Speicherüberwachung ein Fehlersignal an die Zeitüberwachung. Die Zeitüberwachung ist mit dem Prozessor über einen sogenannten Non Mascable Interrupt NMI verbunden und kann über diesen Zugriff den Programmablauf des Programm-Moduls, das die Adressverletzung ausgelöst hat, stoppen. Weitere Verbindungen bestehen in an sich bekannter Weise zwischen dem Prozessor und der Resource ROM sowie zwischen dem Prozessor und der Resource RAM.

Fig. 3 zeigt eine graphische Darstellung einer in der Überwachungseinheit 4 abgelegten Zuweisungstabelle 5 sowie eine Verknüpfungsvorschrift der einzelnen Programm Module zu den Zeilen der Zuweisungstabelle. Jedem Programm-Modul Modul 1, Modul 2 bis Modul n ist eine Zeile der Zuweisungstabelle 5 zugeordnet, in Fig. 3 symbolisiert durch die Zeiger 6. In der Zuweisungstabelle 5 sind für die jeweiligen Programm-Module die zugewiesenen modulorientierten Speichergrenzen Upper Limit 1, Upper Limit 2 bis Upper Limit n, sowie Lower Limit 1, Lower Limit 2 bis Lower Limit n und die zugewiesenen modulorientierten Verarbeitungszeiten t1, t2 bis tn eingetragen. Die Spalten der Zuweisungstabelle 5 sind den Systemresourcen ROM,RAM, I/O,TIME zugeordnet. Jedem Programm-Modul Modul 1, Modul 2 bis Modul n können für jede Systemresource ROM, RAM, I/O, TIME individuelle Speichergrenzen und Zeiten zugeordnet werden. Der Eintrag der Speichergrenzen und Zeiten in die Zuweisungstabelle 5 erfolgt vorteilhaft off-line, das heißt vor dem Programmstart. Entscheidend ist, daß die Einträge einen garantierten Schutz besitzen, so daß sie durch ein laufendes Programm-Modul nicht mehr verändert werden können. Dies läßt sich gegebennfalls auch dadurch erreichen, daß die Liste während der Initialisierungsphase eines Programms geladen wird und anschließend durch ein Sicherungsbit dem Zugriff des laufenden Programms entzogen wird. Dieses Sicherungsbit wird ausschließlich durch den Reset eines Prozessors zurückgesetzt. Bei bereits ausgetesteten Systemen ist es vorteilhaft, die Zuweisungstabelle 5 hardwaremässig abzulegen, zB in Form eines EPROM.

Speichergrenzen (Lower Limit, Upper Limit) können den Informationen eines Linkers entnommen werden, die Ausführungszeiten ( t1,t2 bis tn) sind vom Programmentwickler anzugeben. Sie werden wie in dargestellt in die Zuweisungstabelle 5 eingetragen. Jedes Programm-Modul ( Modul 1, Modul 2 bis Modul n) adressiert mit seinem Aufruf im Prozessor die ihm zugeordnete Zeile in der Zuweisungstabelle 5 und aktiviert damit einen individuellen Überwachungsmechanismus. Wird ein Programm-Modul ( z.B. Modul 1) von einem weiteren Programm-Modul (z.B. Modul 2 ) unterbrochen, wird der aktuelle Zeiger 6 in einem nicht dargestellten jedoch dem Fachmann bekannten Überwachungsstack abgelgt. Ein neuer Zeiger 6 aktiviert eine entsprechende neue Zeile der Zuweisungstabelle 5, die solange wirksam ist, wie das zugeordnete Modul bearbeitet wird. Nach der Beendigung wird der ursprüngliche Zeiger 6 wieder vom Überwachungsstack geladen und aktiviert. Der zeitliche Ablauf der Programm-Module ist zyklisch, was durch die den Pfeil mit der Bezeichnung Loop dargestellt ist.

Parallel zu den Speichergrenzen enthält die Zuweisungstabelle 5 modulorientierte Zeiten ( t1, t2 bis tn). Sie werden beispielsweise beim Aufruf eines Programm-Modul in die Zeitüberwachung geladen und heruntergezählt. Beendet das Programm-Modul seine Bearbeitung bevor der Wert Null erreicht ist, arbeitet das Programm-Modul fehlerfrei. Wird Null erreicht, liegt ein Fehler vor, ein Interrupt wird eingeleitet, der wiederum vom Programmierer mit einem entsprechenden Dienst zu verbinden ist. Vorteilhaft ist auch in diesem Fall eine Protokollierung des Ereignisses und die Einleitung eines adäquaten Notprogramms, das dem Interrupt als Interrupt-Service hinterlegt ist.

## Patentansprüche

1. Verfahren zur Partitionierung und Überwachung einer softwaregesteuerten Elektronik (1) aus einem Prozessor, mindestens einem Lesespeicher (ROM), mindestens einem Schreib-und Lesespeicher (RAM) und einer Überwachungseinheit (4),
dadurch gekennzeichnet,
daß die Überwachungseinheit (4) mittels einer fest abgelegten Zuweisungstabelle (5) die Speicher (ROM, RAM) in einzelne Speicherbereiche (Modul 1, Modul 2 bis Modul n) unterteilt und diese fest durch ein laufendes Programm-Modul auch im Fehlerfall nicht beeinflußbar einzelnen Programm-Modulen zuordnet.

2. Verfahren nach Anspruch 1, dadurch gekennzeichet, daß die Überwachungseinheit (4) mittels Zeitüberwachung und Zuweisungstabelle (5) die Verarbeitungszeiten (t1, t2 bis tn) der einzelnen Programm-Module überwacht und daß die Zeitüberwachung durch das laufende Programm-Modul auch im Fehlerfall nicht beeinflußt werden kann.

3. Verfahren nach Anspruch 1 oder Anspruch 2, dadurch gekennzeichnet, daß die Überwachungseinheit (4) bei Verletzung einer in der Zuweisungstabelle fest abgelegten Speichergrenzen ( Upper Limit 1, Upper Limit 2 bis Upper Limit n, Lower Limit 1, Lower Limit 2 bis Lower Limit n) oder Verletzung einer der Zeitvorgaben (t1,t2 bis tn) die Verletzung protokolliert und das die Verletzung verursachende Programm-Modul mit einem Interrupt abbricht.

4. Verfahren nach Anspruch 3, dadurch gekennzeichnet, daß der Interrupt mit einer Interrupt-Service-Routine hinterlegt ist.

5. Verfahren nach einem der Ansprüche 1 bis 4, dadurch gekennzeichnet, daß die Speichergrenzen (Upper Limit 1, Upper Limit 2 bis Upper Limit n, Lower Limit 1, Lower Limit 2 bis Lower Limit n) mittels eines Linkers festgelegt werden.

6. Verfahren nach einem der Ansprüche 2 bis 5, dadurch gekennzeichnet, daß für jedes Programm-Modul mindestens zwei Zeiten in der Zuweisungstabelle (5) eingetragen sind.
